# EUROPEAN PATENT APPLICATION

(11) **EP 3 476 878 A1**
(43) Date of publication of application: **01.05.2019**
(21) Application number: 17815278.1
(22) Date of filing: 15.06.2017
(51) Int. Cl.: C08G 59/24, B32B 5/28, C08G 59/50, C08J 5/04

(54) **GAS-BARRIER MATERIAL, RESIN COMPOSITION, GAS-BARRIER OBJECT, CURED OBJECT, AND COMPOSITE MATERIAL**

(30) Priority: 22.06.2016 JP 2016123680
(71) Applicant: Hitachi Chemical Company, Ltd., Chiyoda-ku Tokyo 100-6606 (JP)
(72) Inventor: FUKUDA, Kazumasa, Tokyo 100-6606 (JP); TAKEZAWA, Yoshitaka, Tokyo 100-6606 (JP); YOSHIDA, Yuka, Tokyo 100-6606 (JP); MARUYAMA, Tetsushi, Tokyo 100-6606 (JP)
(74) Representative: Hoffmann Eitle
(86) International application number: PCT/JP2017/022173
(87) International publication number: WO 2017/221810

(57) **Abstract**

A gas barrier material, comprising: a thermosetting resin capable of forming a smectic structure via a curing reaction; and an amine curing agent.

## Description

### Technical Field

The present invention relates to a gas barrier material, a resin composition, a gas barrier member a cured product, and a composite material.

### Background Art

Conventionally, resin materials having gas barrier properties have been developed in a wide range of fields such as container packaging materials. In recent years, as attention has been paid to hydrogen energy, in particular hydrogen gas barrier properties among gas barrier properties are being demanded for materials. As a resin material having gas barrier properties, polyvinyl alcohol copolymer, an epoxy resin, and the like are known.

An epoxy resin sheet is superior to other resin sheets in many points such as adhesiveness, heat resistance, chemical resistance, electrical characteristics, or mechanical properties. On the other hand, regarding hydrogen gas barrier properties, an epoxy resin is inferior to a polyvinyl alcohol copolymer, nylon, or the like.

In order to exhibit high hydrogen gas barrier properties, highly crystalline resins, resins having high intermolecular interactions, and the like are considered to be useful, and in recent years, liquid crystalline resin has been drawing attention as a material exhibiting high hydrogen gas barrier properties for its unique molecular form.

As the liquid crystalline resin, those having excellent barrier properties to gas and liquid have been studied (see, for example, Patent Document 1), and it is also studied to use a liquid crystalline resin as an inner liner of a tank (see, for example, Patent Document 2).

Epoxy resin is also used as a matrix resin of fiber reinforced plastic (FRP). However, a cured product of an epoxy resin has low fracture toughness, and for this reason, FRP using an epoxy resin as a matrix resin is not sufficient in impact resistance, and improvement is desired.

Therefore, as a method for improving the fracture toughness of an epoxy resin, a method of blending a rubber component in an epoxy resin is disclosed (for example, see Patent Document 3).

### Related Art Document

### Patent Document

Patent Document 1: Japanese Patent Application Laid-Open (JP-A) No. 2001-500242
Patent Document 2: JP-A H04-249699
Patent Document 3: International Publications No. WO 2001/42330

### SUMMARY OF INVENTION

### Technical Problem

Although a polyvinyl alcohol copolymer is excellent in hydrogen gas barrier properties, the polymer has a problem that moisture in the environment is easily absorbed and the hydrogen gas barrier properties gradually decrease by absorbing water. A polyvinyl alcohol copolymer is a thermoplastic resin and is inferior in physical properties as compared with a thermosetting resin.

As described in Patent Document 3, in a case in which a compounding amount of a rubber component in an epoxy resin composition is adjusted in such a manner to obtain sufficiently high fracture toughness, a flexural modulus of a matrix resin may decrease, whereby a compressive strength of FRP may decrease.

As another method for improving the fracture toughness of an epoxy resin, a method using an epoxy resin having a high molecular weight, or a method using a curing agent having a high molecular weight together with an epoxy resin, may be considered. However, with these methods, there may be a problem in that a glass transition temperature is lowered and heat resistance is lowered when cured.

The present invention has been made in view of the above circumstances, and an object thereof is to provide a gas barrier material and a resin composition capable of forming a cured product that is excellent in hydrogen gas barrier property and fracture toughness while maintaining heat resistance, and to provide a gas barrier material, a cured product, and a composite material that are excellent in heat resistance, hydrogen gas barrier property, and fracture toughness.

### Means for Solving the Problems

A specific means for solving the above-described problems includes the following embodiments.
<1> A gas barrier material, comprising:
   a thermosetting resin capable of forming a smectic structure via a curing reaction; and
   an amine curing agent.
<2> The gas barrier material according to <1>, in which a fracture toughness value is 1.0 MPa·m^{1/2} or more when cured.
<3> The gas barrier material according to <1> or <2>, in which the thermosetting resin has a mesogenic group in a molecule.
<4> The gas barrier material according to any one of <1> to <3>, in which the thermosetting resin includes an epoxy monomer represented by the following Formula (1): 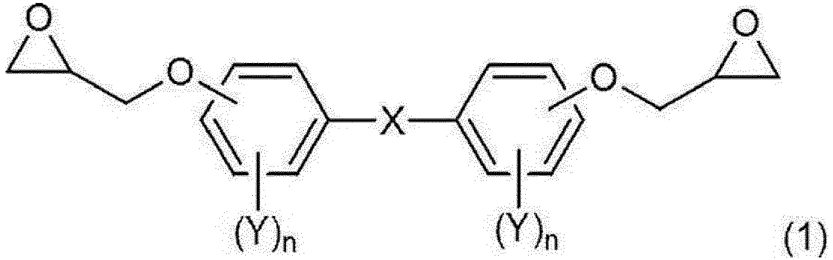 in which, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; and each n independently represents an integer from 0 to 4; 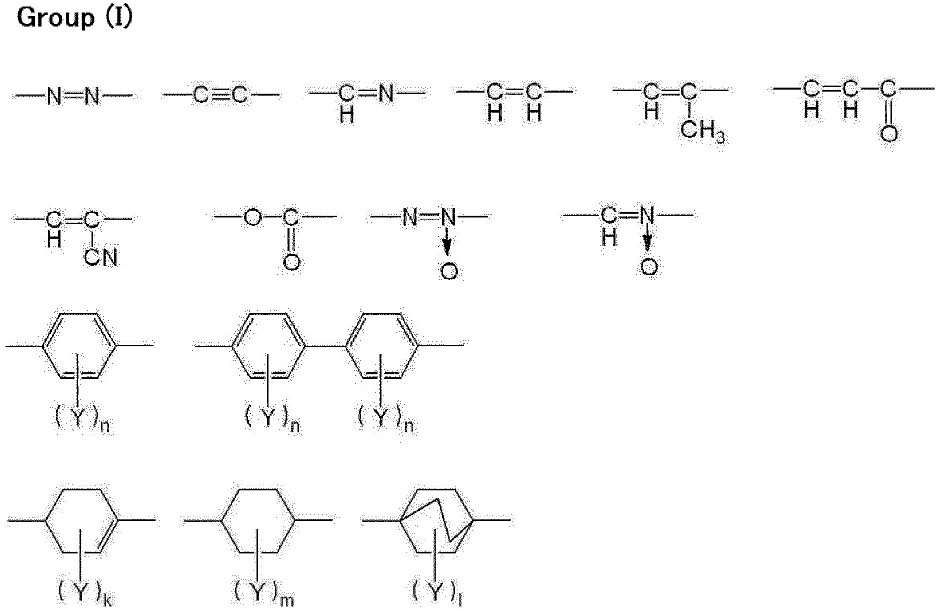 in which, in Group (I) consisting of divalent groups, each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12.
<5> The gas barrier material according to any one of <1> to <4>, in which the amine curing agent includes an amine curing agent having a benzene ring or a naphthalene ring.
<6> The gas barrier material according to <5>, in which the amine curing agent having a benzene ring or naphthalene ring includes an amine curing agent having an amino group on the benzene ring or the naphthalene ring.
<7> The gas barrier material according to any one of <1> to <6>, in which a hydrogen gas permeability coefficient at 25°C is 6.0 × 10⁻¹¹ cm³·cm/(cm²·s·cmHg) or less when cured.
<8> The gas barrier material according to any one of <1> to <7>, in which a glass transition temperature is 150°C or higher when cured.
<9> A gas barrier member obtained by curing the gas barrier material according to any one of <1> to <8>.
<10> A resin composition, comprising:
   a thermosetting resin capable of forming a smectic structure via a curing reaction; and
   an amine curing agent.
<11> The resin composition according to <10>, in which a fracture toughness value is 1.0 MPa·m^{1/2} or more when cured.
<12> The resin composition according to <10> or <11>, in which the thermosetting resin has a mesogenic group in a molecule.
<13> The resin composition according to any one of <10> to <12>, in which the thermosetting resin includes an epoxy monomer represented by the following Formula (1): 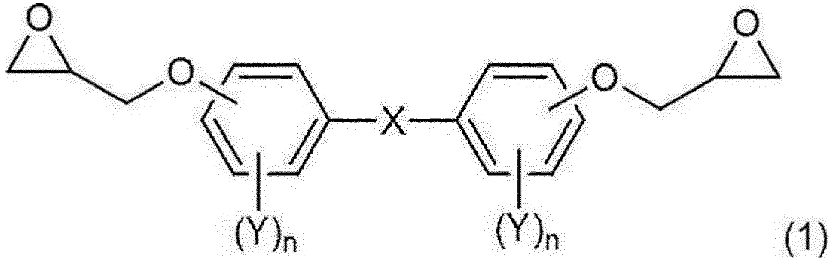 in which, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; and each n independently represents an integer from 0 to 4; 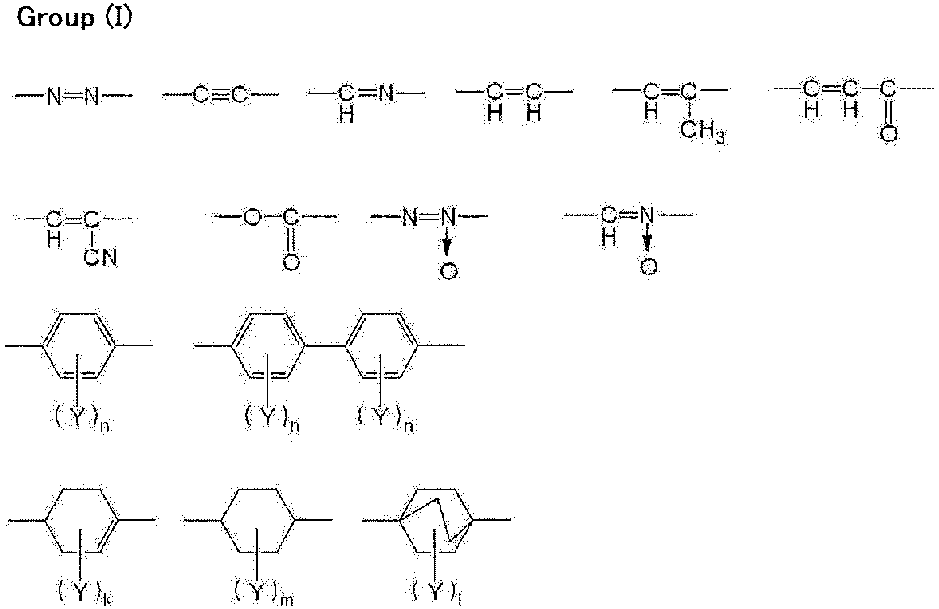 in which, in Group (I) consisting of divalent groups, each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12.
<14> The resin composition according to any one of <10> to <13>, in which the amine curing agent includes an amine curing agent having a benzene ring or a naphthalene ring.
<15> The resin composition according to <14>, in which the amine curing agent having a benzene ring or naphthalene ring includes an amine curing agent having an amino group on the benzene ring or the naphthalene ring.
<16> The resin composition according to any one of <10> to <15>, in which a hydrogen gas permeability coefficient at 25°C is 6.0 × 10⁻¹¹ cm³·cm/(cm²·s·cmHg) or less when cured.
<17> The resin composition according to any one of <10> to <16>, in which a glass transition temperature is 150°C or higher when cured.
<18> A cured product obtained by curing the resin composition according to any one of <10> to <17>.
<19> A composite material, comprising the cured product according to <18> and a reinforcing material.
<20> The composite material according to <19>, comprising:
   a cured layer comprising the cured product; and
   a reinforcing material layer that includes the reinforcing material and that is layered on or above the cured layer.
<21> The composite material according to <19> or <20>, in which the reinforcing material includes a carbon fiber.

### Effects of the Invention

According to the present invention, it is possible to provide a gas barrier material and a resin composition capable of forming a cured product excellent in hydrogen gas barrier property and fracture toughness while maintaining heat resistance, and a gas barrier material, a cured product, and a composite material excellent in heat resistance, hydrogen gas barrier property, and fracture toughness.

### BRIEF DESCRIPTION OF DRAWINGS

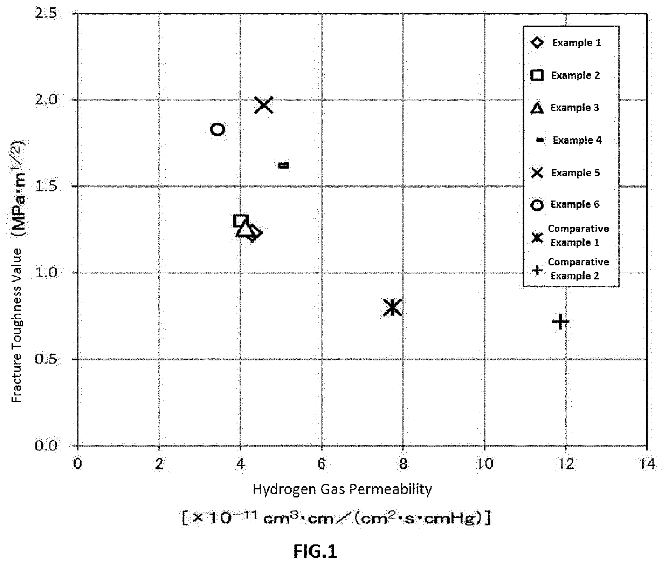

Fig.1 is a graph in which hydrogen gas permeability coefficient is plotted on the horizontal axis and fracture toughness value is plotted on the vertical axis for test pieces of Examples 1 to 6 and Comparative Examples 1 and 2.

### DESCRIPTION OF EMBODIMENTS

Hereinafter, embodiments of the present invention will be described in detail. However, the present invention is not limited to the following embodiments. In the following embodiments, the constituent elements (including the element processes and the like) are not indispensable except when particularly explicitly mentioned. The same applies to numerical values and ranges thereof, and does not limit the present invention.

In the present disclosures, each numerical range specified using "(from) ... to ..." represents a range including the numerical values noted before and after "to" as the minimum value and the maximum value, respectively.

In the present disclosures, with respect to numerical ranges stated hierarchically herein, the upper limit or the lower limit of a numerical range of a hierarchical level may be replaced with the upper limit or the lower limit of a numerical range of another hierarchical level. Further, in the present disclosures, with respect to a numerical range, the upper limit or the lower limit of the numerical range may be replaced with a relevant value shown in any of Examples.

In the present disclosures, a component may include plural kinds of substances corresponding to the component. In a case in which plural kinds of substances exist corresponding to the component in the composition, a content means, unless otherwise specified, a total amount of the plural kinds of substances existing in the composition.

In the present disclosures, plural kinds of particles may include corresponding to a component in the composition. In a case in which plural kinds of particles exist corresponding to a component in the composition, a particle diameter means, unless otherwise specified, a value with respect to a mixture of the plural kinds of particles existing in the composition.

In the present disclosures, the term "layer" comprehends herein not only a case in which the layer is formed over the whole observed region where the layer is present, but also a case in which the layer is formed only on part of the region.

In the present disclosures, the term "layered" as used herein indicates "provided on or above", in which two or more layers may be bonded or detachable.

### < Gas Barrier Material and Resin Composition >

The gas barrier material in the present embodiment contains a thermosetting resin (hereinafter, also referred to as "specific thermosetting resin") capable of forming a smectic structure by a curing reaction and an amine curing agent. The gas barrier material and the resin composition in the present embodiment contain a thermosetting resin (hereinafter, also referred to as "specific thermosetting resin") capable of forming a smectic structure by a curing reaction and an amine curing agent. The gas barrier material and the resin composition in the present embodiment may contain another component if necessary.

The gas barrier material and the resin composition in the present embodiment have the above-described configuration, and thus can form a gas barrier member and cured product excellent in heat resistance, hydrogen gas barrier property, and fracture toughness. The detailed reason is not necessarily clear, and can be inferred as follows.

In other words, since a specific thermosetting resin, which is contained in the gas barrier material or the resin composition in the present embodiment, can form a smectic structure by a curing reaction, the resin is excellent in hydrogen gas barrier property when cured. By using an amine curing agent, it is possible to form a gas barrier member and cured product that are also excellent in fracture toughness without impairing heat resistance and hydrogen gas barrier properties.

Hereinafter, each component constituting the gas barrier material and the resin composition in the present embodiment will be described.

### (Thermosetting Resin)

The gas barrier material and the resin composition in the present embodiment contain a thermosetting resin capable of forming a smectic structure by a curing reaction. A specific thermosetting resin may be used singly, or two or more kinds thereof may be used in combination.

The specific thermosetting resin is preferably a thermosetting resin having a mesogenic group in a molecule. When the specific thermosetting resin has a mesogenic group in a molecule, a smectic structure can be formed by a curing reaction.

Here, the mesogenic group refers to a functional group that makes it easy to express crystallinity or liquid crystallinity in cured state by a function of intermolecular interaction. Specific examples thereof include a biphenyl group, a phenylbenzoate group, a cyclohexylbenzoate group, an azobenzene group, a stilbene group, and a derivative thereof.

In a case in which a thermosetting resin having a mesogenic group in the molecule is cured, a high-order structure having high regularity derived from a mesogenic group is formed. The high order structure means a structure including a high order structure in which its constituent elements are arranged to form a micro ordered structure, and, for example, corresponds to a crystal phase and a liquid crystal phase. Whether such a high order structure exists or not can be determined by observation with a polarization microscope. In other words, in a case in which interference fringes due to depolarization are found in the observation in a crossed-Nicols state, it can be determined that a high order structure exists. The high order structure is usually present in an island shape in a resin and forms a domain structure. Each of the islands forming the domain structure is called a high order structure. The structural units constituting the high order structure are bonded each other generally by a covalent bond.

In particular, from the viewpoint of hydrogen gas barrier properties, the resin composition in the present embodiment contains a specific thermosetting resin capable of forming a smectic structure via a curing reaction.

Examples of high order structures having high regularity derived from a mesogenic group include a nematic structure and a smectic structure. The nematic structure is a high order structure in which the long molecular axes are oriented in a uniform direction and have only orientation order. On the other hand, the smectic structure is a high-ordered structure having a one-dimensional positional order and a layer structure in addition to orientation order. Therefore, the orderliness of the molecule is higher in the smectic structure than in the nematic structure. For this reason, the hydrogen gas barrier properties of a cured product are also higher in a case of forming a smectic structure than in a case of forming a nematic structure.

Whether or not the resin forms a smectic structure in a cured product can be determined by performing X-ray diffraction measurement of the cured product using an X-ray analyzer (for example, manufactured by Rigaku Corporation). When measurement is carried out using CuKα1 rays at a tube voltage: 40 kV, a tube current: 20 mA, and a measuring range: 2θ being from 2° to 30°, a diffraction peak appears in the range of 2θ being from 2° to 5° for a cured product in which the resin forms a smectic structure.

When a resin forms a nematic structure in a cured product, interference fringes due to depolarization are found in observation in a crossed-Nicols state using a polarization microscope. However, when a nematic structure is formed, in an X-ray diffraction measurement under the above conditions, a diffraction peak does not appear in the range of 2θ = from 2° to 5°, and a diffraction peak appears in the range of 2θ = from 2° to 10°.

Here, examples of the specific thermosetting resin having a mesogenic group in the molecule include an epoxy resin, a polyimide resin, a polyamide imide resin, a triazine resin, a phenol resin, a melamine resin, a polyester resin, a cyanate ester resin, and a modified resin thereof.

From the viewpoint of heat resistance, the specific thermosetting resin having a mesogenic group in the molecule is preferably at least one selected from the group consisting of an epoxy resin, a phenol resin and a triazine resin, and from the viewpoint of adhesiveness, an epoxy resin is more preferable. The epoxy resin may be used singly, or two or more kinds thereof may be used in combination.

For the specific description of the epoxy resin having a mesogenic group in the molecule, for example, the description in Japanese Patent No. 4118691 can be referred to.

The specific thermosetting resin having a mesogenic group in the molecule preferably includes an epoxy monomer represented by the following Formula (1). The epoxy monomer represented by Formula (1) may be used singly, or two or more kinds thereof may be used in combination.

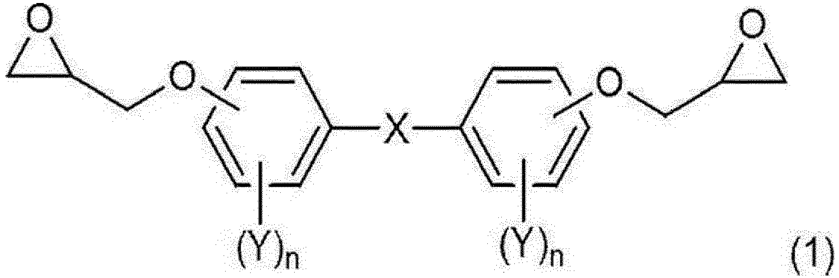

In Formula (1), X represents a single bond or at least one kind of linking group selected from the following Group (I) consisting of divalent groups. Each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group. Each n independently represents an integer from 0 to 4.

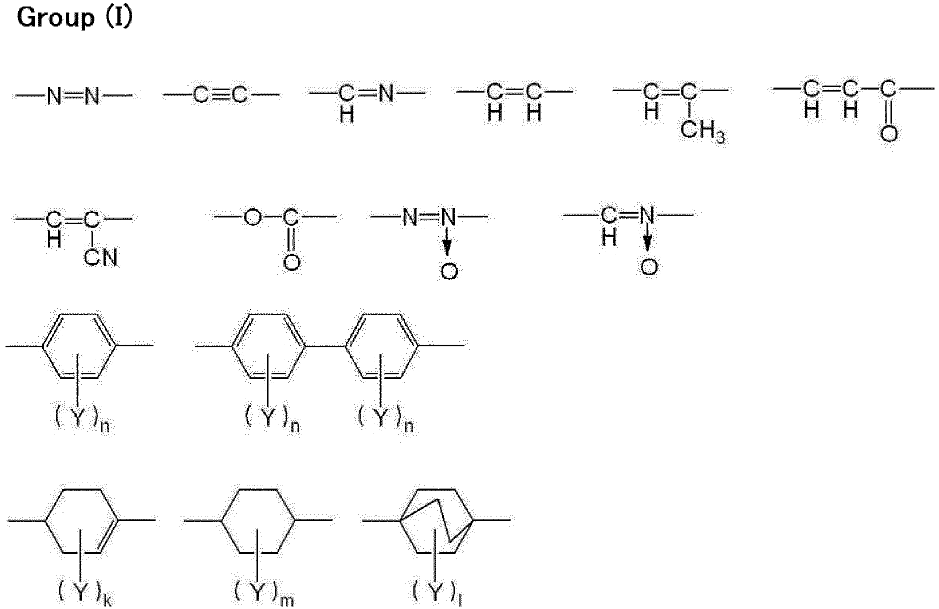

In Group (I) consisting of divalent groups, each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group. Each n independently represents an integer from 0 to 4; k represents an integer from 0 to 7; m represents an integer from 0 to 8; and 1 represents an integer from 0 to 12.

In the Group (I) consisting of divalent groups, a linking direction of each divalent group may be any direction.

X in Formula (1) is preferably at least one kind of linking group selected from the following Group (II) consisting of divalent groups. Y, n, k, m, and 1 in Group (II) consisting of a divalent group are respectively the same as Y, n, k, m, and 1 in Group (I) consisting of a divalent group, and preferred embodiment is also the same.

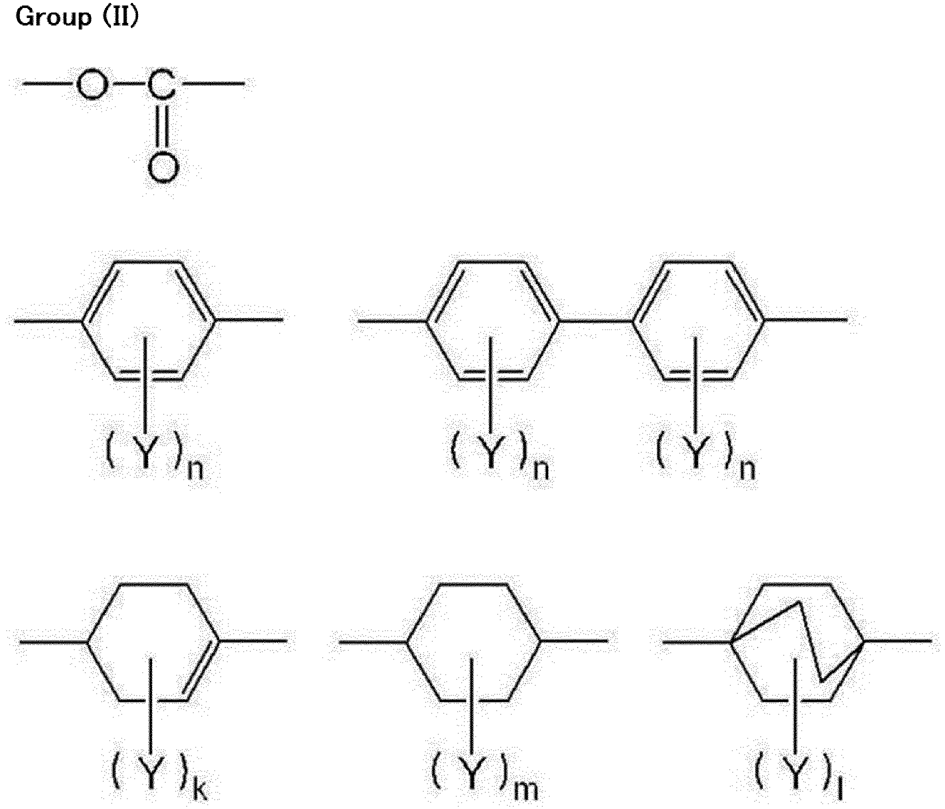

In Formula (1) and Group (I) consisting of divalent groups, it is preferable that each Y is independently an aliphatic hydrocarbon group having from 1 to 4 carbon atoms, an aliphatic alkoxy group having from 1 to 4 carbon atoms, a fluorine atom, a chlorine atom, a bromine atom, an iodine atom, a cyano group, a nitro group, or an acetyl group, it is more preferable that each Y is independently a methyl group, an ethyl group, a methoxy group, an ethoxy group, or chlorine atom, and it is still more preferable that each Y is independently a methyl group, or an ethyl group.

In Formula (1) and Group (I) consisting of divalent groups, it is preferable that each n is independently an integer from 0 to 2, and it is more preferable that each n is independently an integer from 0 or 1. k is preferably an integer from 0 to 3, and more preferably 0 or 1. m is preferably an integer from 0 to 4, and more preferably 0 or 1. 1 is preferably an integer from 0 to 4, and more preferably 0 or 1.

The liquid crystalline epoxy monomer represented by Formula (1) preferably has a structure of a mesogenic group in which three or more 6-membered ring groups are connected in a straight chain manner, from the viewpoint of easily forming a high order structure. The number of the linearly connected 6-membered ring groups contained in the mesogenic group is preferably 3 or more, and more preferably 3 or 4 from the viewpoint of formability.

The linearly connected 6-membered ring group contained in the mesogenic group may be a 6-membered ring group derived from an aromatic ring such as benzene, or a 6-membered cyclic group derived from an aliphatic ring such as cyclohexane or cyclohexene. Among them, it is preferable that at least one is a 6-membered ring group derived from an aromatic ring, and it is more preferable that one of 6-membered ring groups, which is linearly connected and is contained in the mesogenic group, is an aliphatic ring, and the remaining rings are all aromatic rings.

The resin composition in the present embodiment preferably contains at least one selected from the group consisting of 1-(3-methyl-4-oxiranylmethoxyphenyl)-4-(4-oxiranylmethoxyphenyl)-1-cyclohexene, 1-(3-methyl-4-oxiranylmethoxyphenyl)-4-(4-oxiranylmethoxyphenyl)benzene, 2-methyl-1 ,4-phenylene-bis {4-(2,3-epoxypropoxy)benzoate}, 4-{4-(2,3-epoxypropoxy)phenyl}cyclohexyl=4-(2,3-epoxypropoxy)-3-methylbenzoate, and 4-{4-(2,3-epoxypropoxy)phenyl}cyclohexyl=4-(2,3-epoxypropoxy)benzoate, as the liquid crystalline epoxy monomers represented by Formula (1), from the viewpoint of exhibiting a temperature range of 25°C or higher in which a liquid crystal phase is expressed, a high orientation property of the liquid crystal phase of a cured product, and excellent gas barrier properties.

The liquid crystalline epoxy monomer represented by Formula (1) can be produced by a known method. For example, the liquid crystalline epoxy monomer represented by Formula (1) can be obtained by the production methods described in Japanese Patent No. 4619770, Japanese Patent Application Laid-Open (JP-A) No. 2011-98952, and Japanese Patent No. 5471975.

A part of the epoxy monomer having a mesogenic group in the molecule may be partially polymerized with a curing agent or the like to form a prepolymer. Liquid crystalline epoxy monomers are generally easy to crystallize and are often low in solubility in solvents. When at least a part of a liquid crystalline epoxy monomer is polymerized, crystallization of the liquid crystalline epoxy monomer tends to be suppressed. Therefore, in a case in which the liquid crystalline epoxy monomer is prepolymerized, a moldability of a resin composition tends to be improved.

The prepolymer is obtained, for example, by reacting an epoxy monomer with a phenol compound. The phenolic compound is not limited, and examples thereof include hydroquinone, resorcin, catechol, 1,3,5-trihydroxybenzene, 1,2,4-trihydroxybenzene, and 1,2,3-trihydroxybenzene, and from the viewpoint of formability, at least one selected from the group consisting of hydroquinone, resorcin, and catechol is preferable.

A ratio of a equivalent number of the epoxy monomer to the phenol compound (epoxy monomer: phenol compound) in the reaction is preferably from 10: 0.5 to 10: 5, more preferably from 10: 1 to 10: 4, and still more preferably from 10: 1.2 to 10: 3.

Examples of a solvent used in the reaction include cyclohexanone, 1-methoxy-2-propanol, *N*-methyl-2-pyrrolidone, ethylene glycol, acetic anhydride, toluene, xylene, dimethylformamide, and dimethylsulfoxide.

A temperature of the reaction is preferably from 100°C to 190°C, more preferably from 110°C to 180°C, and still more preferably from 120°C to 170°C.

The gas barrier material and the resin composition may contains other thermosetting resin other than the specific thermosetting resin. In a case, from the viewpoints of further improving heat resistance, hydrogen gas barrier properties, and fracture toughness of the cured product, a content of the specific thermosetting resin is, for example, preferably from 60% by mass or more, and more preferably from 70% by mass or more, still more preferably from 80% by mass or more, based on a total amount of other thermosetting resin and the specific thermosetting resin.

### (Amine Curing Agent)

The gas barrier material and the resin composition contain an amine curing agent. The amine curing agent may be used singly, or two or more kinds thereof in combination.

As the amine curing agent, those usually used can be used without particular limitation, and those which are commercially available may be used. Among them, from the viewpoint of fracture toughness when cured, an amine curing agent having a benzene ring or a naphthalene ring is preferably used, and an amine curing agent having an amino group on a benzene ring or a naphthalene ring is more preferably used. From the viewpoint of curability, a polyfunctional amine curing agent having two or more amino groups is preferably used.

Examples of the amine curing agent include 3,3'-diaminodiphenyl sulfone, 4,4'-diaminodiphenyl sulfone, 4,4'-diaminodiphenyl methane, 4,4'-diaminodiphenyl ether, 4,4'-diamino-3,3'-dimethoxybiphenyl, 4,4'-diaminophenyl benzoate, 1,5-diaminonaphthalene, 1,3-diaminonaphthalene, 1,2-phenylenediamine, 1,3-phenylenediamine, 1,4-phenylenediamine, 4,4'-diaminobenzanilide, 3,3'-diaminobenzanilide, trimethylene-bis-4-aminobenzoate, 1,4-diaminonaphthalene, and 1,8-diaminonaphthalene.

From the viewpoint of gas barrier properties, fracture toughness, and heat resistance, 3,3'-diaminodiphenyl sulfone, 4,4'-diaminodiphenyl sulfone, 4,4'-diaminodiphenyl methane, 1,5-diaminonaphthalene, trimethylene-bis-4-aminobenzoate, or 4,4'-diaminobenzanilide is preferably used, and 4,4'-diaminodiphenyl sulfone, 3,3'-diaminodiphenyl sulfone, 4,4'-diaminodiphenyl methane, or 1,5-diaminonaphthalene is still more preferably used.

A content of the amine curing agent in the gas barrier material and the resin composition is not particularly limited. For example, in a case in which the thermosetting resin is an epoxy resin, from the viewpoint of efficiently performing a curing reaction, the ratio of an equivalent number of active hydrogen of amine curing agent (number of equivalents of amine) to an equivalent number of epoxy group of epoxy resin (the equivalent number of amine / the equivalent number of epoxy group) is, for example, preferably from 0.3 to 3.0, and more preferably from 0.5 to 2.0.

The gas barrier material and the resin composition may contain other components according to the intended use. Examples of other components include fillers, a solvent, a fiber, a thermoset resin, and a thermoplastic resin.

< Physical Properties of Gas Barrier Material and Resin Composition >

The gas barrier material and the resin composition in the present embodiment preferably have a fracture toughness value of 1.0 MPa·m^{1/2} or more when cured, more preferably 1.1 MPa·m^{1/2} or more, and still more preferably 1.2 MPa·m^{1/2} or more.

In the present disclosure, the fracture toughness value is calculated by 3 point bending measurement based on ASTM D5045. As an evaluation apparatus, an impact tester (for example, Instron Japan Company Limited, Instron 5948) can be used.

The gas barrier material and the resin composition in the present embodiment preferably have a hydrogen gas permeability coefficient at 25°C of 6.0 × 10⁻¹¹ cm³·cm/(cm²·s·cmHg) or less when cured, more preferably 5.5 × 10⁻¹¹ cm³·cm/(cm²·s·cmHg) or less, and still more preferably 5.0 × 10⁻¹¹ cm³·cm/(cm²·s·cmHg) or less.

In the present disclosures, the hydrogen gas permeability coefficient can be calculated from a transmittance in a range from 22 hours to 24 hours after measuring the hydrogen gas permeability over 24 hours, according to JIS K7126-1: 2006. As an evaluation device, a gas permeability measurement device (for example, BT-3, manufactured by Toyo Seiki) can be used.

The gas barrier material and the resin composition in the present embodiment preferably have a glass transition temperature of 150°C or higher when cured, more preferably 160°C or higher, and still more preferably 170°C or higher.

In the present disclosure, the glass transition temperature is calculated by dynamic viscoelasticity measurement in tensile mode. A measurement conditions are frequency: 10 Hz, temperature rising rate: 5°C/min, and strain: 0.1%, and a peak of obtained tan δ chart is set to the glass transition temperature. For example, RSA-G2 manufactured by TA Instruments Japan Inc. may be used as the measurement device.

### < Method of Preparing Gas Barrier Material and Resin Composition >

As a method of preparing the gas barrier material and the resin composition in the present embodiment, a commonly used preparation method can be used without particular limitation. For example, the gas barrier material and the resin composition in the present embodiment can be prepared by mixing a specific thermosetting resin and an amine curing agent.

### < Use or the Like of Gas Barrier Material and Resin Composition >

The gas barrier material and the resin composition in the present embodiment are excellent in heat resistance, hydrogen gas barrier property, and fracture toughness in a cured state. Therefore, the gas barrier material and the resin composition in the present embodiment can be suitably used for applications requiring heat resistance, hydrogen gas barrier property, and fracture toughness. For example, the gas barrier material and the resin composition in the present embodiment can be used for manufacturing an inner liner or the like of a high pressure hydrogen storage tank for on-vehicle use.

### < Gas Barrier Member and Cured Product >

The gas barrier member in the present embodiment is obtained by curing the above-described gas barrier material. The cured product in the present embodiment is obtained by curing the above-described resin composition.

The gas barrier member and the cured product in the present embodiment can be produced by curing the gas barrier material and the resin composition in the present embodiment. A method of curing can be appropriately selected depending on a components of the gas barrier material or the resin composition, application of the gas barrier material or the cured product, and the like, and the method is preferably a heat treatment. For example, the gas barrier material or the resin composition in the present embodiment is heated at from 120°C to 270°C for from 0.1 hours to 10 hours, preferably at from 140°C to 240°C for from 1 hour to 8 hours, and as a result, the gas barrier material and the cured product in the present embodiment are obtained.

The gas barrier member and the cured product preferably have a fracture toughness value of 1.0 MPa·m^{1/2} or more, more preferably 1.1 MPa·m^{1/2} or more, and still more preferably 1.2 MPa·m^{1/2} or more.

The gas barrier member and the cured product preferably has a hydrogen gas permeability coefficient at 25°C of 6.0 × 10⁻¹¹ cm³·cm/(cm²·s·cmHg) or less, more preferably 5.5 × 10⁻¹¹ cm³·cm/(cm²·s·cmHg) or less, and still more preferably 5.0 × 10⁻¹¹ cm³·cm/(cm²·s·cmhg) or less.

The gas barrier member and the cured product preferably has a glass transition temperature of 150 °C or higher, more preferably 160 °C or higher, and still more preferably 170 °C or higher.

### < Composite Material >

The composite material in the present embodiment includes the above-described cured product and a reinforcing material. The composite material can be used, for example, for manufacturing a high pressure hydrogen storage tank for on-vehicle use.

Examples of the reinforcing material include a carbon fiber, a glass fiber, Kevlar fiber, a ultrahigh molecular weight polyethylene fiber, an alumina filler, a boron nitride filler, an aluminum nitride filler, a mica filler, and a silicon filler, and from the viewpoint of the strength of the composite material, a carbon fiber is preferably contained.

The composite material may have a shape in which a cured layer containing a cured product and a reinforcing material layer containing a reinforcing member are layered. Examples of the reinforcing material layer is a layer composed of carbon fiber reinforced plastic. By having a reinforcing material layer in addition to the cured layer, the fracture toughness can be improved as compared with cases without a reinforcing material layer.

An average thicknesses of the cured layer and the reinforcing material layer are not particularly limited. In some embodiments, the average thickness of the cured layer may be, for example, from 0.01 mm to 10 mm, and may be from 0.05 mm to 5 mm. In some embodiment, the average thickness of the reinforcing material layer may be, for example, from 1 mm to 300 mm, and may be from 5 mm to 100 mm. The average thickness of the cured layer and the reinforcing material layer can be obtained from the arithmetic average value of thicknesses at any five positions.

### Examples

Hereinafter, the present invention will be described more specifically with reference to Examples, but the present invention is not limited to these Examples.

Thermosetting resins used in preparation of resin compositions and their abbreviations are shown below.
- Resin A: A compound having the following structure (see Japanese Patent No. 5471975) 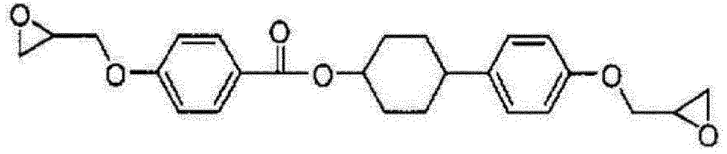
- Resin B: A compound having the following structure (see Japanese Patent No. 4619770) 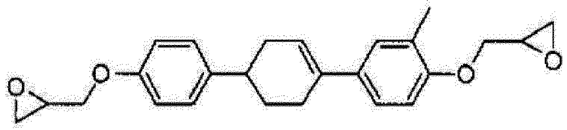
- Resin C: Resin obtained by the following synthesis method

In a 500 mL three-necked flask, 50 parts by mass of Resin A was weighed out and 80 parts by mass of a synthetic solvent (cyclohexanone) was added thereto. Into the three-necked flask, a cooling pipe and a nitrogen introducing pipe were installed, and stirring feathers were attached in such a manner to be immersed in the synthetic solvent. The three-necked flask was immersed in an oil bath at 160°C and stirring was started. After confirming that Resin A was dissolved after several minutes and turned into a transparent solution, 1.6 parts by mass of a phenol compound (hydroquinone) was added to the flask, and 0.5 parts by mass of a curing catalyst (triphenylphosphine) was further added thereto and heating was continued at 160°C oil bath temperature. After continuing heating for 5 hours, cyclohexanone was distilled off from the reaction solution under reduced pressure, and the residue was cooled to room temperature (25°C) to obtain Resin C. This Resin C contained a part of the synthesis solvent and unreacted Resin A.

### < Example 1 >

Resin A: 78.3 parts by mass, and 4,4'-diaminodiphenyl sulfone (manufactured by Wako Pure Chemical Industries, Ltd.): 21.7 parts by mass were placed in a stainless steel petri dish, and heated to 180°C on a hot plate. After the resin in the stainless steel petri dish was melted, heating was carried out at 180°C for 1 hour. After cooling to normal temperature (25°C), the sample was taken out from the stainless steel petri dish, and heated in an oven at 230°C for 1 hour to obtain a cured product.

The obtained cured product was polished by a rotary polishing machine in such a manner to have a thickness of 2 mm, and a test piece for evaluating hydrogen gas permeability was obtained. A cured product was cut into a rectangular parallelepiped of 3.75 mm × 7.5 mm × 33 mm, and a test piece for evaluating fracture toughness was obtained. Further, a cured product was cut out into a strip of 2 mm × 0.5 mm × 40 mm, and a test piece for evaluating the glass transition temperature was obtained.

### < Example 2 >

Test pieces were produced by the same manner as described in Example 1, except that Resin B: 76.4 parts by mass, and 4,4'-diaminodiphenyl sulfone: 23.6 parts by mass were used.

### < Example 3 >

Test pieces were produced by the same manner as described in Example 1, except that Resin C: 81.3 parts by mass (non-volatile content), and 4,4'-diaminodiphenyl sulfone: 18.7 parts by mass were used.

### < Example 4 >

Resin C: 81.3 parts by mass (non-volatile content), and 3,3'-diaminodiphenyl sulfone: 18.7 parts by mass were placed in a stainless steel petri dish, and heated to 180°C on a hot plate. After the resin in the stainless steel petri dish was melted, heating was carried out at 150°C for 1 hour, and further heating was carried out at 180°C. After cooling to normal temperature (25°C), the sample was taken out from the stainless steel petri dish, and heated in an oven at 230°C for 1 hour to obtain a cured product. Test pieces were produced by using the obtained cured product by the same manner as described in Example 1.

### < Example 5 >

Resin C: 84.5 parts by mass (non-volatile content), and 4,4'-diaminodiphenyl sulfone: 15.5 parts by mass were placed in a stainless steel petri dish, and heated to 130°C on a hot plate. After the resin in the stainless steel petri dish was melted, heating was carried out at 130°C for 1 hour, and further heating was carried out at 180°C for 1 hour. After cooling to normal temperature (25°C), the sample was taken out from the stainless steel petri dish, and heated in an oven at 230°C for 1 hour to obtain a cured product. Test pieces were produced by using the obtained cured product by the same manner as described in Example 1.

### < Example 6 >

Resin C: 87.2 parts by mass (non-volatile content), and 1,5-diaminonaphthalene: 12.8 parts by mass were placed in a stainless steel petri dish, and heated to 200°C on a hot plate. After the resin in the stainless steel petri dish was melted, heating was carried out at 130°C for 1 hour, and further heating was carried out at 180°C for 1 hour. After cooling to normal temperature (25°C), the sample was taken out from the stainless steel petri dish, and heated in an oven at 230°C for 1 hour to obtain a cured product. Test pieces were produced by using the obtained cured product by the same manner as described in Example 1.

### < Comparative Example 1 >

Test pieces were produced by the same manner as described in Example 1, except that epoxy resin (manufactued by Mitsubishi Chemical Co., Ltd, YL6121H): 73.8 parts by mass, and 4,4'-diaminodiphenyl sulfone: 26.2 parts by mass.

### < Comparative Example 2 >

Test pieces were produced by the same manner as described in Example 1, except that epoxy resin (manufactued by Mitsubishi Chemical Co., Ltd, YL980): 75.0 parts by mass, and 4,4'-diaminodiphenyl sulfone: 25.0 parts by mass.

### < Evaluation >

### (Confirmation of Higher Order Structure)

Presence or absence and a state of the higher order structure were confirmed by analyzing test pieces of Examples 1 to 6 and Comparative Examples 1 and 2 using an X-ray diffractometer (manufactured by Rigaku Corporation). X-ray diffraction measurement was carried out under the conditions of CuKα1 ray, tube voltage: 40 kV, tube current: 20 mA, and measurement range: 2θ = from 2° to 30°.

### (Evaluation of Hydrogen Gas Permeability)

The hydrogen gas permeability coefficient was calculated as an index of hydrogen gas permeability.

For the test pieces of Examples 1 to 6 and Comparative Examples 1 to 2, according to JIS K7126-1: 2006, a permeability of hydrogen gas at 25°C was measured over 24 hours, and a hydrogen gas permeability coefficient was calculated from the range from 22 hours to 24 hours. As the evaluation device, a gas permeability measurement device (BT-3, manufactured by Toyo Seiki Seisaku-sho, Ltd.) was used.

### (Evaluation of Fracture Toughness Value)

For the test pieces of Examples 1 to 6 and Comparative Examples 1 and 2, three-point bending measurement was carried out based on ASTM D5045, and the fracture toughness value was calculated. As the evaluation device, Instron 5948 (Instron Japan Company Limited) was used.

### (Evaluation of Glass Transition Temperature)

For the test pieces of Examples 1 to 6 and Comparative Examples 1 and 2, the dynamic viscoelasticity was measured by a tensile mode, and the glass transition temperature was calculated. Measurement conditions were frequency: 10 Hz, temperature rising rate: 5°C/min, strain: 0.1%. A peak of obtained tan δ chart was regarded as the glass transition temperature. As the evaluation device, RSA-G2 (TA Instruments Japan Inc.) was used.

Table 1 shows presence/absence and the state of the higher order structure, the hydrogen gas permeability coefficient, the fracture toughness value, and the glass transition temperature of the test pieces of Examples 1 to 6 and Comparative Examples 1 and 2. Fig. 1 shows the results of plotting the hydrogen gas permeability coefficient on the horizontal axis and the fracture toughness value on the vertical axis for the test pieces of Examples 1 to 6 and Comparative Examples 1 and 2.

**[Table 1]**

| | High Order Structure | Hydrogen Gas Permeability Coefficient (cm³·cm/(cm²·s·cmHg) | Fracture Toughness (MPa·m^{1/2}) | Glass Transition Temperature (°C) |
|---|---|---|---|---|
| Example 1 | Smectic | 4.29×10⁻¹¹ | 1.23 | 288 |
| Example 2 | Smectic | 4.01×10⁻¹¹ | 1.30 | 289 |
| Example 3 | Smectic | 4.12×10⁻¹¹ | 1.26 | 242 |
| Example 4 | Smectic | 4.95×10⁻¹¹ | 1.62 | 186 |
| Example 5 | Smectic | 4.57×10⁻¹¹ | 1.97 | 190 |
| Example 6 | Smectic | 3.44×10⁻¹¹ | 1.83 | 205 |
| Comparative Example 1 | Nematic | 7.74×10⁻¹¹ | 0.80 | 257 |
| Comparative Example 2 | None | 11.87×10⁻¹¹ | 0.72 | 226 |

As can be seen from Table 1, in Comparative Example 1 in which the test piece forms a nematic structure, hydrogen gas barrier property and fracture toughness are low as compared with Examples 1 to 6 in which the test piece forms a smectic structure. The hydrogen gas barrier property of Comparative Example 2 in which the test piece does not form a higher order structure is lower than that of Comparative Example 1 and the fracture toughness is also low. These results suggest that hydrogen gas barrier properties and fracture toughness are improved by the formation of a higher order structure, and in particular, when the higher order structure is a smectic structure, an effect of improving hydrogen gas barrier property and fracture toughness is high.

As can be seen from Fig. 1, the test pieces prepared in Examples 1 to 6 have high hydrogen gas barrier properties and fracture toughness.

The entire contents of the disclosure by Japanese Patent Application No. 2016-123680 filed on June 22, 2016 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. A gas barrier material, comprising:
a thermosetting resin capable of forming a smectic structure via a curing reaction; and
an amine curing agent.

2. The gas barrier material according to claim 1, wherein a fracture toughness value is 1.0 MPa·m^{1/2} or more when cured.

3. The gas barrier material according to claim 1 or claim 2, wherein the thermosetting resin has a mesogenic group in a molecule.

4. The gas barrier material according to any one of claims 1 to 3, wherein the thermosetting resin comprises an epoxy monomer represented by the following Formula (1): 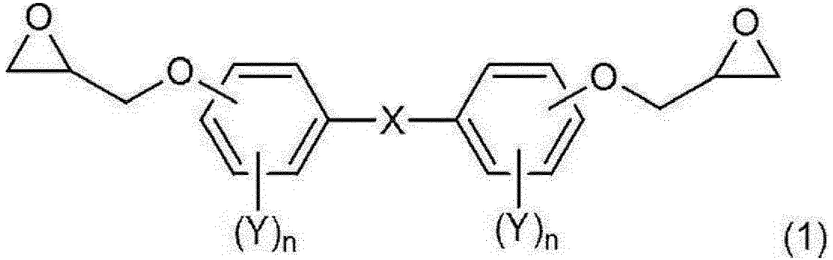 wherein, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; and each n independently represents an integer from 0 to 4; 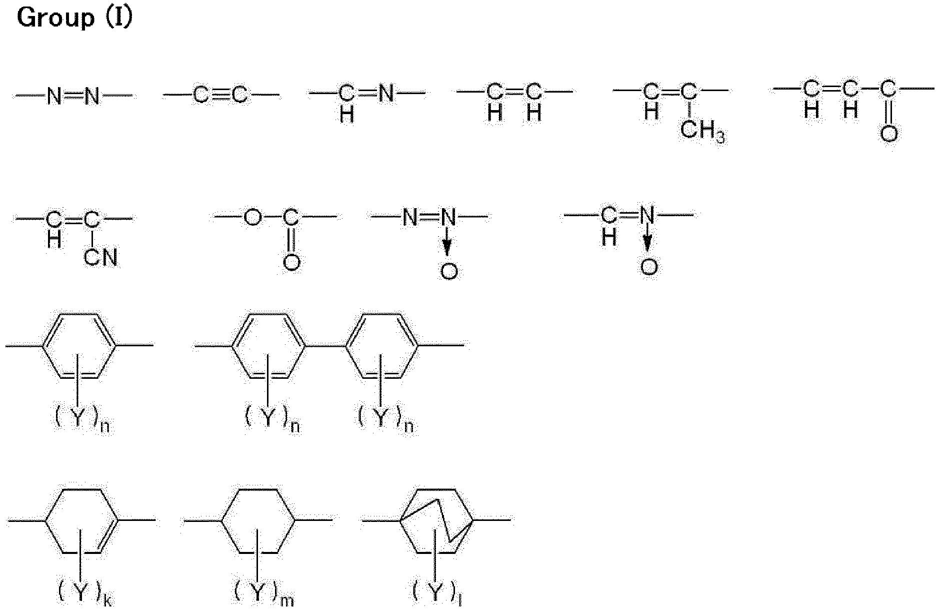 wherein, in Group (I) consisting of divalent groups, each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12.

5. The gas barrier material according to any one of claims 1 to 4, wherein the amine curing agent comprises an amine curing agent having a benzene ring or a naphthalene ring.

6. The gas barrier material according to claim 5, wherein the amine curing agent having a benzene ring or naphthalene ring comprises an amine curing agent having an amino group on the benzene ring or the naphthalene ring.

7. The gas barrier material according to any one of claims 1 to 6, wherein a hydrogen gas permeability coefficient at 25°C is 6.0 × 10⁻¹¹ cm³·cm/(cm²·s·cmHg) or less when cured.

8. The gas barrier material according to any one of claims 1 to 7, wherein a glass transition temperature is 150°C or higher when cured.

9. A gas barrier member obtained by curing the gas barrier material according to any one of claims 1 to 8.

10. A resin composition, comprising:
a thermosetting resin capable of forming a smectic structure via a curing reaction; and
an amine curing agent.

11. The resin composition according to claim 10, wherein a fracture toughness value is 1.0 MPa·m^{1/2} or more when cured.

12. The resin composition according to claim 10 or claim 11, wherein the thermosetting resin has a mesogenic group in a molecule.

13. The resin composition according to any one of claims 10 to 12, wherein a thermosetting resin comprises an epoxy monomer represented by the following Formula (1): 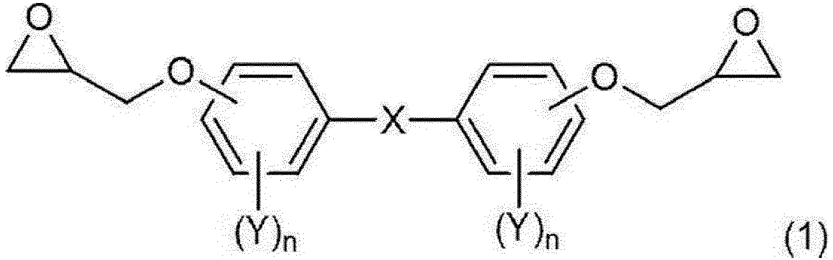 wherein, in Formula (1), X represents a single bond or at least one kind of linking group selected from the following Group (I) consisting of divalent groups; each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; and each n independently represents an integer from 0 to 4; 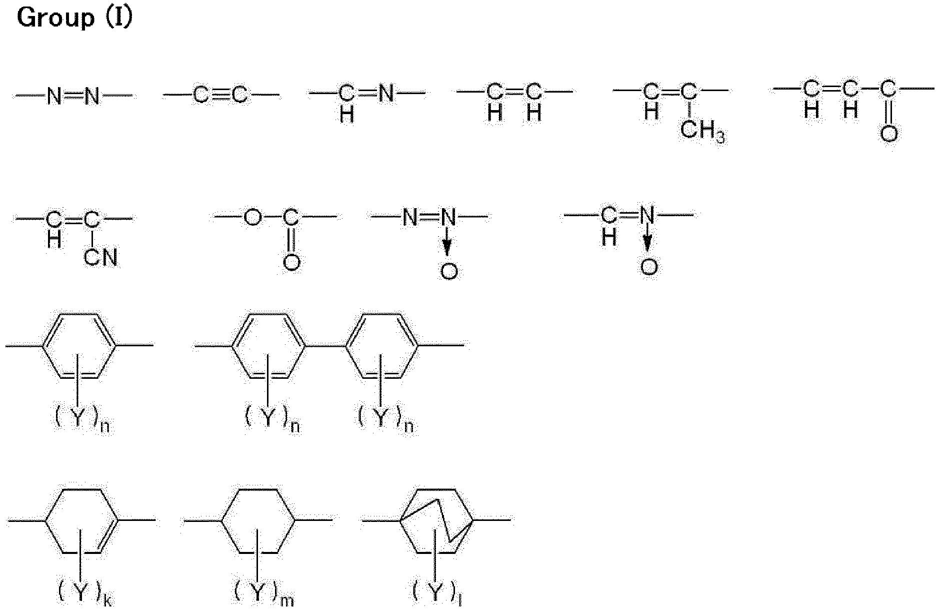 wherein, in Group (I) consisting of divalent groups, each Y independently represents an aliphatic hydrocarbon group having from 1 to 8 carbon atoms, an aliphatic alkoxy group having from 1 to 8 carbon atoms, a fluorine atom, a chlorine atom, a bromine atom, an iodine atom, a cyano group, a nitro group, or an acetyl group; each n independently represents an integer from 0 to 4; k represents an integer from 0 to 7; m represents an integer from 0 to 8; and 1 represents an integer from 0 to 12.

14. The resin composition according to any one of claims 10 to 13, wherein the amine curing agent comprises an amine curing agent having a benzene ring or a naphthalene ring.

15. The resin composition according to claim 14, wherein the amine curing agent having a benzene ring or naphthalene ring comprises an amine curing agent having an amino group on the benzene ring or the naphthalene ring.

16. The resin composition according to any one of claims 10 to 15, wherein a hydrogen gas permeability coefficient at 25°C is 6.0 × 10⁻¹¹ cm³·cm/(cm²·s·cmHg) or less when cured.

17. The resin composition according to any one of claims 10 to 16, wherein a glass transition temperature is 150°C or higher when cured.

18. A cured product obtained by curing the resin composition according to any one of claims 10 to 17.

19. A composite material, comprising the cured product according to claim 18 and a reinforcing material.

20. The composite material according to claim 19, comprising:
a cured layer comprising the cured product; and
a reinforcing material layer that comprises the reinforcing material and that is layered on or above the cured layer.

21. The composite material according to claim 19 or claim 20, wherein the reinforcing material comprises a carbon fiber.
